# EUROPEAN PATENT APPLICATION

(11) **EP 2 829 254 A1**
(43) Date of publication of application: **28.01.2015**
(21) Application number: 13003712.0
(22) Date of filing: 24.07.2013
(51) Int. Cl.: A61C 19/04, G01N 21/95

(54) **Apparatus for visualizing defects of a dental instrument**

(71) Applicant: VDW GmbH, 81737 München (DE)
(72) Inventor: Peric, Borislava, 80337 Munich (DE)
(74) Representative: Hartz, Nikolai

(57) **Abstract**

The present invention relates to an apparatus (100) for visualizing features and/or defects of a dental instrument having a longitudinal axis, the apparatus comprising:
(a) a holder (with the rigid structure 20) having
(a1) an image background surface (12), and
(a2) a holding means (with the abutment 141) for positioning a dental instrument adjacent to the image background surface (12);
(b) means for arranging the image background surface (12)of the holder in a predetermined position relative to a digital camera (30), whereby, when the image background surface (12) is arranged in a predetermined position relative to the digital camera (30), the apparatus defines an optical path between the image background surface (12)and the digital camera (30), and the holding means may receive and hold the dental instrument in a predetermined position in the optical path adjacent to the image background surface (12).

## Description

### Field of the Invention

The present invention relates to an apparatus for visualizing features and/or defects of a dental instrument. Moreover, the present invention relates to a process for visualizing features and/or defects of a dental instrument, and a system for carrying out the process.

The apparatus of the present invention may be used in combination with an electronic device provided with a digital camera, whereby the dental instrument may be conveniently and quickly positioned in a predetermined position in order to capture images of the dental instrument suitable for analysis on a computer display by the dental practitioner or by a software application running on a computer.

### Background of the Invention

In dental procedures, a dental practitioner frequently utilizes dental instruments such as dental drills and files which may be driven by a dental handpiece or contra-angle. Given that the dental instruments are delicate structures, the use of the dental instruments in dental procedures may result in wear and damage of the dental instrument, thereby limiting the lifetime of the dental instrument.

In case of an endodontic treatment, it may be necessary to use a number of different dental instruments in a predetermined order. Moreover, given that dental instruments may be reused in different procedures, the dental practitioner may have a range of dental instruments of the same type, which differ with regard to the degree of wear and damage due to previous use in dental procedures.

Accordingly, the dental practitioner is confronted with a problem of identifying the correct type of the dental instrument in order to ascertain that the dental procedure may be continued with an appropriate dental instrument.

Moreover, it is necessary that the dental practitioner recognises excessive wear or damage to a dental instrument in order to be able to replace the dental instrument prior to breakage of the dental instrument during the procedure. Accordingly, the dental practitioner examines during the treatment if signs of wear, such as untwisting of an endodontic file, can be seen. In particular, if an endodontic instrument appears to be bent after being used in a strongly curved canal, it will be discarded.

Moreover, it is desirable that the dental practitioner keeps track of the use of a specific dental instrument in order to implement a routine replacement scheme for replacing dental instruments after a predetermined time of use. Ideally, the dental practitioner coordinates the replacement scheme with a supplier of dental instruments so that replacement instruments are always available to the dental practitioner without the risk that orders of new dental instruments are not placed.

Moreover, endodontic files may comprise silicone stoppers slidable along the longitudinal axis of the dental file. Silicone stoppers are used for limiting the working length of the dental file so that excessive or insufficient treatment during the endodontic procedure is avoided. In order to properly position the silicone stopper, the dental practitioner has to rely on his visual judgement of the silicone stopper in relation to depth markings present on the file or a calliper.

The identification and positioning problems are aggravated by the small dimensions of the dental instruments whereby the dental practitioner has to closely examine the dental instrument in order to become aware of any details of the dental instrument.

The method commonly used by the dental practitioner based on the direct visual inspection. Accordingly, most dental practitioners rely on the inspection of the dental instrument without any magnification. Moreover, this observation has the further disadvantage that the dental instrument is only seen by one person. Another disadvantage is that no permanent direct record of the observation may be taken which may be further analysed while the dental practitioner continues with the dental procedure. Instead, the dental practitioner records the results of his direct visual inspection which cannot be double-checked at a later stage.

Electronic devices including portable electronic devices such as tablet computers, personal digital assistants or mobile phones frequently comprise a digital camera. In order to capture images using an electronic device, such as an Apple iPad® or any tablet computer or personal digital assistant (PDA) using an integrated rear-facing camera, a user would typically need to hold the device in front of him. In case of a dental procedure, the dental practitioner would have to coordinate two hands when trying to take of an image of the dental instrument. However, it is difficult to get the fine focusing and stable images and to avoid the reflected light, which would be necessary to take an image displaying the fine details required to be recorded in the context of a dental procedure.

### Summary of the Invention

It is the problem of the present invention to provide an apparatus for visualizing features and/or defects of a dental instrument by using a digital camera, whereby the dental instrument may be quickly and reliably positioned for visualization.

Moreover, it is a further problem of the present invention to provide an apparatus which facilitates the positioning of a silicone stopper for limiting the working length of an endodontic file.

Furthermore, it is the problem of the present invention to provide a process for visualizing features and/or defects of a dental instrument by using a digital camera, whereby the dental instrument may be quickly and reliably positioned for visualization and for length determination and magnification.

Furthermore, it is the problem of the present invention to provide a system for positioning a silicone stopper for limiting the working length on an endodontic file by using a digital camera, whereby the silicone stopper may be quickly and reliably positioned by the dental practitioner during the endodontic procedure and for length determination and magnification.

The present invention provides an apparatus for visualizing features and/or defects of a dental instrument having a longitudinal axis, the apparatus comprising:
(a) a holder having
   (a1) an image background surface, and
   (a2) a holding means for positioning a dental instrument adjacent to the image background surface;
   (b) means for arranging the image background surface of the holder in a predetermined position relative to a digital camera,
   whereby, when the image background surface is arranged in a predetermined position relative to the digital camera, the apparatus defines an optical path between the image background surface and the digital camera, and the holding means may receive and hold the dental instrument in a predetermined position in the optical path adjacent to the image background surface.

Furthermore, the present invention provides a process for visualizing features and/or defects of a dental instrument, which comprises providing an apparatus as defined by any one of the preceding claims;
(i) providing a digital camera;
(ii) establishing an optical path between the digital camera and the apparatus;
(iii) positioning the dental instrument at a predetermined position in the optical path so that the dental instrument is in the focus of the digital camera;
(iv) recording an image of the dental instrument with the digital camera; and
(v) identifying the features and/or defects of the dental instrument by processing the image.

Finally, the present invention provides a system for carrying out the process of the present invention, said system comprising
(a) a holder having an image background surface and a holding means for positioning a dental instrument adjacent to the surface;
(b) a rigid structure contiguous with the holder, said structure being adapted to arrange the image background surface of the holder in a predefined position relative to a digital camera,
(c) a digital camera, and optionally
(d) a computer.

According to the present invention, it is possible to quickly and reliably record a high-resolution image of a dental instrument since the dental instrument may be positioned at a predefined position in the optical path close to the focal point of the digital camera. The apparatus of the present invention provides that the distance between the lens of the digital camera and the dental instrument can be kept essentially constant. In order to avoid any reflected light, an image background surface is provided. The present invention also allows visualization of dental instruments by stable high-resolution images which may serve for the identification of dental instruments and/or defects, and optionally for determining the length from tip to stopper of the dental instrument.

### Brief Description of the Figures

Fig. 1 shows a perspective front view of an embodiment of the system of the present invention including a holder, a rigid structure contiguous with the holder, a digital camera, and a computer.
Fig. 2 shows a perspective rear view of the embodiment of the system of the present invention as shown in Fig.1.
Fig. 3 shows a perspective front view of a partial embodiment of the system of the present invention shown in Fig. 1 whereby the digital camera and the computer are removed from including the rigid structure contiguous with the holder.
Fig. 4 shows a top view of the embodiment of the system of the present invention including a holder, a rigid structure contiguous with the holder, a digital camera, and a computer.
Fig. 5 shows a front view of an embodiment of the system of the present invention including a holder, a rigid structure contiguous with the holder, a digital camera, and a computer.
Fig. 6 shows a perspective front view of the embodiment of the system of the present invention according to figure 1 whereby furthermore the dental instrument and recorded images on the screen are shown.
Fig. 7 shows a further embodiment of a holder useful for the apparatus of the present invention.
Fig. 8 shows a further embodiment of a holder useful for the apparatus of the present invention.

### Detailed Description of Preferred Embodiments

The present invention provides an apparatus for visualizing features and/or defects of a dental instrument. Preferably, the apparatus is useful for positioning a silicone stopper on the working length of a dental instrument.

Preferably, the dental instrument is an endodontic instrument. Specific examples of an endodontic instrument are an endodontic file or reamer. Endodontic files and reamers are dental instruments used by dentists when performing root canal treatment. Endodontic files and reamers are particularly used to clean and shape the root canal by performing complete chemomechanical debridement of the root canal to the length of the apical foramen.

An endodontic file may be a hand file, a rotary file or a reciprocating file. Files are commonly made from metal, usually stainless steel or nickel titanium alloy. Files may be made from metal blanks that are twisted or machined to produce various sizes and tapers. Files may comprise silicone stoppers and depth markings. Typical file lengths are 19mm, 21 mm, 25mm, 28mm, and 31 mm.

An ISO sizing system is used to describe the tip size of endodontic files. An endodontic instrument may be marked with markings according to the ISO sizing system or any other system mapping the features of an endodontic instrument to a sizing system. The markings may be based on a colour-code or alphanumeric characters or any other symbols such as a bar code.

The dental instrument may hand-held or be held in a dental handpiece or a contra-angle.

In case the dental instrument is hand-held, the dental practitioner may introduce the dental instrument into the holding means for positioning the dental instrument adjacent to the image background surface.

In case the dental instrument is held in a dental handpiece or a contra-angle, the dental practitioner may introduce the dental instrument or the dental handpiece or contra-angle into the holding means for positioning the dental instrument adjacent to the image background surface.

When the image background surface is arranged in a predetermined position relative to the digital camera, the apparatus of the present invention defines an optical path between the image background surface and the digital camera. The holding means receives and holds the dental instrument in a predetermined position in the optical path adjacent to the image background surface.

The dental instrument has a longitudinal axis. The longitudinal axis is used as a reference axis for the predetermined positioning of the dental instrument. In order to position the longitudinal axis of the dental instrument in a predetermined position, the apparatus according to the present invention comprises a holder.

The holder has an image background surface. The image background surface is preferably planar. Moreover, in order to provide a sufficient contrast of the dental instrument, the image background surface is preferably appropriately coloured. The image background surface has preferably reference markings which are useful in the identification of sizes, tapers, length and other properties of the dental instrument independent from the markings present on the dental instrument. The markings in the image background surface may be a grading or any other reference marking.

Furthermore, the holder has a holding means for positioning a dental instrument adjacent to the image background surface. Accordingly, the holder may comprise means for receiving and releasable holding the dental instrument or the handpiece or contra-angle in a predetermined position. Preferably, the holding means receives and holds the dental instrument in a predetermined position in the optical path adjacent to the image background surface.

Preferably, the holding means may comprise an abutment for receiving the dental instrument or the contra-angle or handpiece. The abutment may be part of a recess in the holder wherein the dental instrument is inserted until the dental instrument or the contra-angel or handpiece contacts the abutment.

According to a specific embodiment, the abutment may be a slot or an elongated hole adapted for receiving the shaft of the dental instrument, which limits the displacement of the dental instrument in a direction of the longitudinal axis.

Preferable, the holder also limits the any degree of freedom which would result in a change of the angle of the longitudinal axis of the dental instrument relative to the image background surface.

Accordingly, the holding means preferably is shaped so that the outer contour of the dental instrument or the handpiece or contra angle form-fits into the holding means.

According to a preferred embodiment, the holding means receiving the dental instrument positions the longitudinal axis of the dental instrument in parallel to the image background surface.

Moreover, the means for arranging the image background surface of the holder in a predetermined position relative to a digital camera preferably arranges the image background surface so that the optical path is orthogonal to the image background surface. It is possible to arrange the optical path in a non-orthogonal manner relative to the image background surface whereby the deviation must be taken into account when the image is analysed. Accordingly, the image recorded by the digital camera may be taken under conditions which allow identification and analysis of the dental instrument under standardized conditions.

The apparatus according to the present invention further comprises means for arranging the image background surface of the holder in a predetermined position relative to a digital camera. According to the present invention, when the image background surface is arranged in a predetermined position relative to the digital camera, the apparatus defines an optical path between the image background surface and the digital camera.

According to a preferred embodiment, the means for positioning a dental instrument adjacent to the image background surface is a rigid structure contiguous with the holder.

According to a specific embodiment, the rigid structure may form part of a casing, stand or docking station used for protecting, arranging and/or connecting the electronic device including the digital camera. Alternatively, the rigid structure may be adapted to be attached to the casing, stand or docking station of the electronic device or the electronic device itself. There are no specific limitations regarding the type of attachment of the means for positioning as long as the image background surface of the holder will be arranged in a predetermined position relative to the digital camera of the electronic device.

According to a further preferred embodiment, the apparatus according to the present invention may further comprise means for changing the direction or redirecting of the optical path. As a specific example for a means for changing the direction of the optical path, a mirror or prism may be mentioned. As used herein, a means for changing the direction of the optical path generally refers to a particular component, assembly, or sub-assembly configured to receive light from the dental instrument and redirect the light such that, upon leaving the means for changing the direction of the optical path, the redirected light is now travelling in a path other than it would have but for the influence of the means for changing the direction or redirecting of the optical path.

The holder may preferably be further adapted to receiving and holding a packaged dental instrument in the optical path adjacent to the image background surface.

Now, the process for visualizing features and/or defects of a dental instrument is further described.

The process is based on an apparatus according to the present invention, which comprises
(a) a holder having
   (a1) an image background surface, and
   (a2) a holding means for positioning a dental instrument adjacent to the image background surface;
(b) means for arranging the image background surface of the holder in a predetermined position relative to a digital camera.

According to the present invention, a digital camera is provided. Preferably, the digital camera forms part of an electronic device such as a tablet computer, a personal digital assistant (PDA) or mobile phone.

The term "electronic device" refers in general to a computer comprising a high-definition display and digital camera functions, and photo viewing capabilities.

As used herein, the term "electronic device" is intended to broadly encompass a single machine or a system of communicatively coupled machines or devices operating together. Exemplary electronic devices can include computing devices such as personal computers, workstations, servers, portable computers, handheld devices, and tablet devices, communications devices such as cellular phones or smart phones. These machines may be implemented as part of a cloud computing arrangement.

Typically, an electronic device includes a system bus to which processors, memory (e.g., random access memory (RAM), read-only memory (ROM), and other state-preserving medium), storage devices, a video interface, and input/output interface ports can be attached.

The electronic device can also include embedded controllers such as programmable or nonprogrammable logic devices or arrays, Application Specific Integrated Circuits (ASICs), embedded computers, smart cards, and the like.

The electronic device can be controlled, at least in part, by input from conventional input devices, e.g., keyboards, touch screens, mice, and audio devices such as a microphone, as well as by directives received from another machine, or other input signal.

The electronic device can utilize one or more connections to one or more remote machines, such as through a network interface, modem, or other communicative coupling.

Electronic devices can be interconnected by way of a physical and/or logical network, such as an intranet, the Internet, local area networks, wide area networks, etc. Network communication can utilize various wired and/or wireless short range or long range carriers and protocols.

Preferably, the electronic device is a tablet computer provided with a docking station so that the touch screen display of the device may be conveniently oriented towards the dental practitioner.

In a further step, an optical path between the digital camera and the apparatus is established. For this purpose, the apparatus of the present invention is arranged in a predetermined position relative to the digital camera of the electronic device, whereby the image background surface is arranged in a predetermined position relative to the digital camera.

According to a further preferred embodiment, the digital camera is integrated in a tablet computer and the optical path is established by releasably attaching the apparatus to the personal digital assistant device.

In a next step, the dental instrument is positioned at a predetermined position in the optical path so that the dental instrument is in the focus of the digital camera.

According to a preferred embodiment, the dental instrument is held by a contra-angle handpiece, or wherein the dental instrument is packaged in a labelled package.

Subsequently, an image of the dental instrument is recorded with the digital camera.

Finally, the features and/or defects of the dental instrument are visualized by processing the image.

According to a preferred embodiment, the dental practitioner is able to visually examine the features and/or defects of the dental instrument in real time on the display of the electronic device or any other display connected to the electronic device. For this purpose, it is preferred that the recorded image may be enlarged, or that the dental practitioner is able to zoom into portions of the recorded image. Preferably, the features to be identified are selected from an identification number, surface features and design features.

The present invention also relates to a system for carrying out the process according to the present invention. The system comprises a holder having an image background surface and a holding means for positioning a dental instrument adjacent to the surface.

The system further comprises a rigid structure contiguous with the holder, said structure being adapted to arrange the image background surface of the holder in a predefined position relative to a digital camera.

Moreover, the system comprises a digital camera. Optionally, the system may comprise an electronic device.

The present invention will now be further illustrated based on the figures.

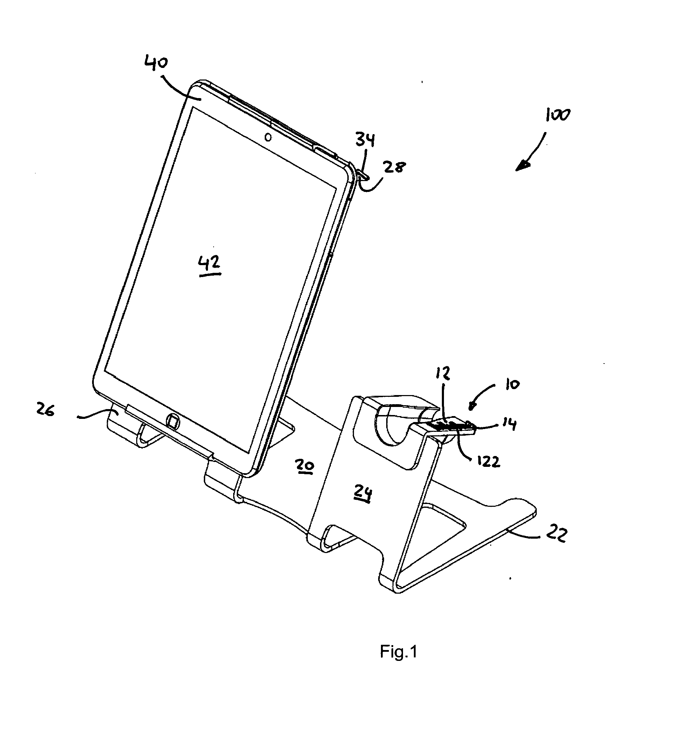

Fig. 1 shows an embodiment of the system 100 of the present invention including a holder 10, a rigid structure 20 contiguous with the holder 10, and a computer 40. A digital camera is present at the backside of the computer 40.

The holder 10 has an image background surface 12, and a holding means 14 for positioning a dental instrument (not shown) adjacent to the image background surface 12.

In Fig. 1, the means for arranging the image background surface 12 of the holder 10 in a predetermined position relative to a digital camera 30 comprises a rigid structure 20. The rigid structure 20 is provided as a frame having a base portion 22, a first upstanding portion 24 for receiving the holder 10 and a second upstanding portion 24 for receiving a tablet computer. The base portion 22 is provided with a flat bottom surface so that the apparatus may be placed on a flat surface. The first upstanding portion 24 releasably holds the holder 10 so that the holder 10 may be removed from the apparatus 1 for sterilization, if necessary. Alternatively, the dental practitioner may exchange the holder depending on the dental instruments or the dental procedure. The second upstanding portion 26 is adapted to receive a computer 40. The computer 40 is preferably a portable electronic device and comprises a display 42 which may be preferably a touch screen. The computer further comprises a digital camera. The apparatus 1 arranges the image background surface12 in a predetermined position relative to the digital camera whereby the apparatus 1 defines an optical path between the image background surface 12 and the digital camera 40. In Fig. 1, the apparatus 1 further comprises means for changing the direction of the optical path, which means is a mirror 28. The image background surface 12 further comprises reference markings 122.

The holding means 14 may receive and hold a dental instrument in a predetermined position in the optical path adjacent to the image background surface 12. Preferably, the dental instrument is an endodontic instrument. The holding means 10 further comprises an abutment 141 for receiving a dental instrument. The abutment 141 is provided as a slot adapted for receiving the shaft of the dental instrument, which limits the displacement of the dental instrument in a direction of the longitudinal axis.

The holding means 10 receiving the dental instrument positions the longitudinal axis of the dental instrument in parallel to the image background surface 12. According to a preferred embodiment, the image background surface is arranged so that the optical path is orthogonal to the image background surface.

The holder may be adapted to receiving and holding a packaged dental instrument in the optical path adjacent to the image background surface.

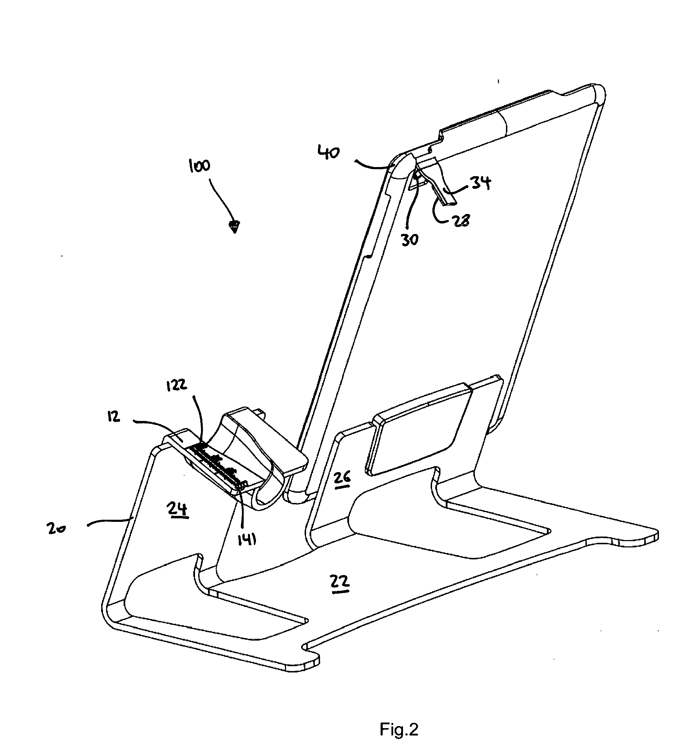

Fig. 2 shows the embodiment of the system 100 of the present invention as shown in Fig.1 in a perspective rear view. Fig. 2 shows the holder 10, which is attached to a rigid structure 20 contiguous with the holder 10, and a computer 40. A digital camera 30 is located at the backside of the computer 4.

The apparatus 1 arranges the image background surface12 in a predetermined position relative to the digital camera whereby the apparatus 1 defines an optical path between the image background surface 12 and the digital camera 40. In Fig. 2, the apparatus 1 further comprises a mirror 28 for changing the direction of the optical pat. The image background surface 12 further comprises reference markings 122.

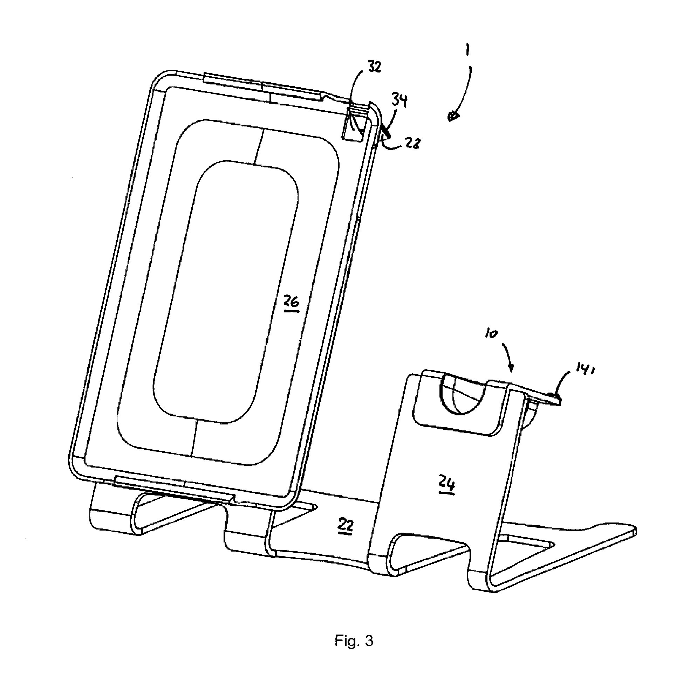

Fig. 3 shows the system 100 of the present invention partially in Fig. 1 in a perspective front view whereby the digital camera and the computer are removed from the rigid structure 20. The second upstanding portion 26 is configured to receive the computer 40 in a snap-fit relationship. An aperture 32 is provided for the optical path to be able to pass through the second upstanding portion 26. Moreover, the second upstanding portion 26 comprises a protrusion 34 adjacent to the aperture 32 which extends in the rearward direction. The protrusion 34 serves as support for the mirror 28. A computer 40 having appropriate dimensions may be introduced into the rigid structure 20 whereby the digital camera 30 of the computer 40 is positioned onto the aperture 32.

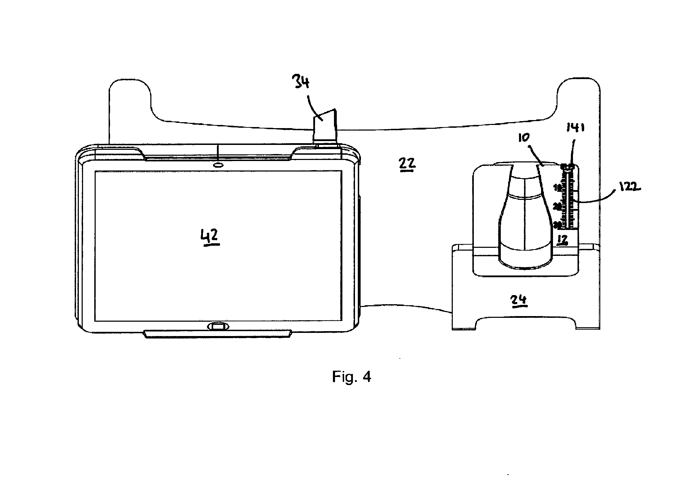

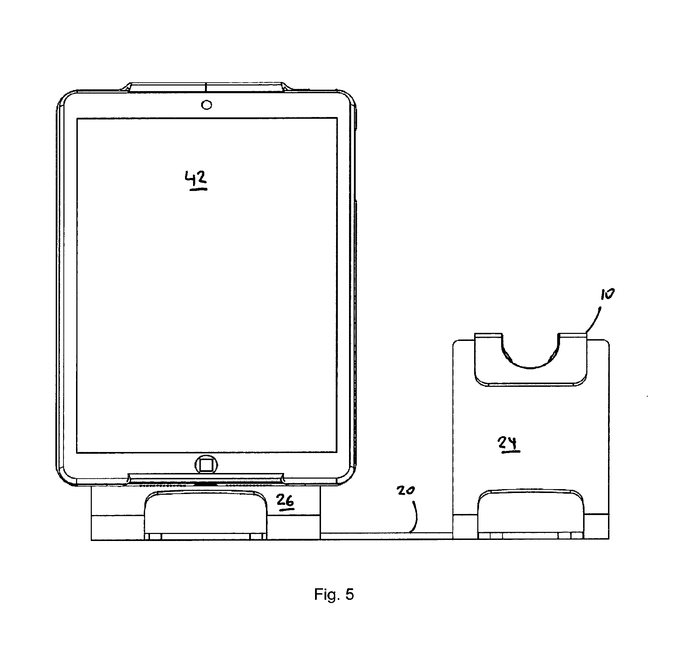

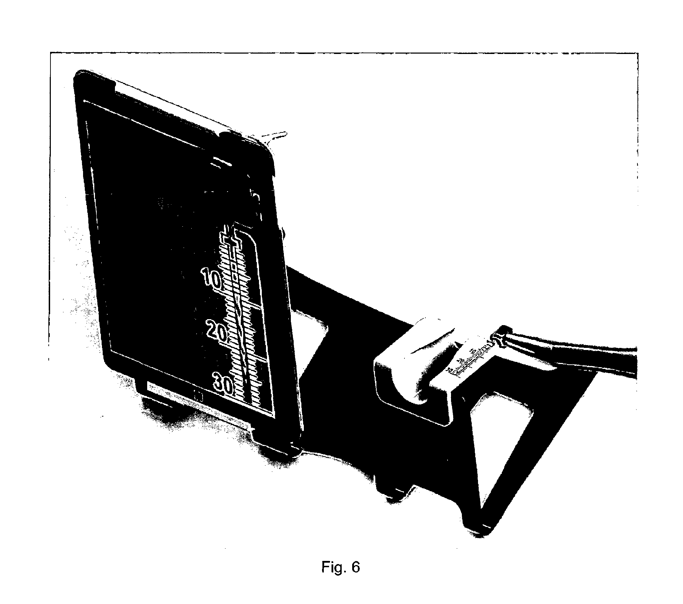

Fig. 4 shows the embodiment of the system of the present invention shown in Fig. 1 in a top view. Fig. 5 shows a front view of the embodiment of the system of Fig. 1. The first upstanding portion 24 and the second upstanding portion 26 are provided in a coplanar manner. The apparatus 10 may be oriented by the dental practitioner so that the display may be conveniently inspected. For example, the apparatus may be placed on a desktop adjacent to the dental chair. The dental practitioner may then reach with the dental handpiece or contra-angle to the apparatus and position the dental instrument into the holder 10. The digital camera 30 may then record images of the dental instrument adjacent the image background surface 12, and display the images on the display as further shown in Fig. 6.

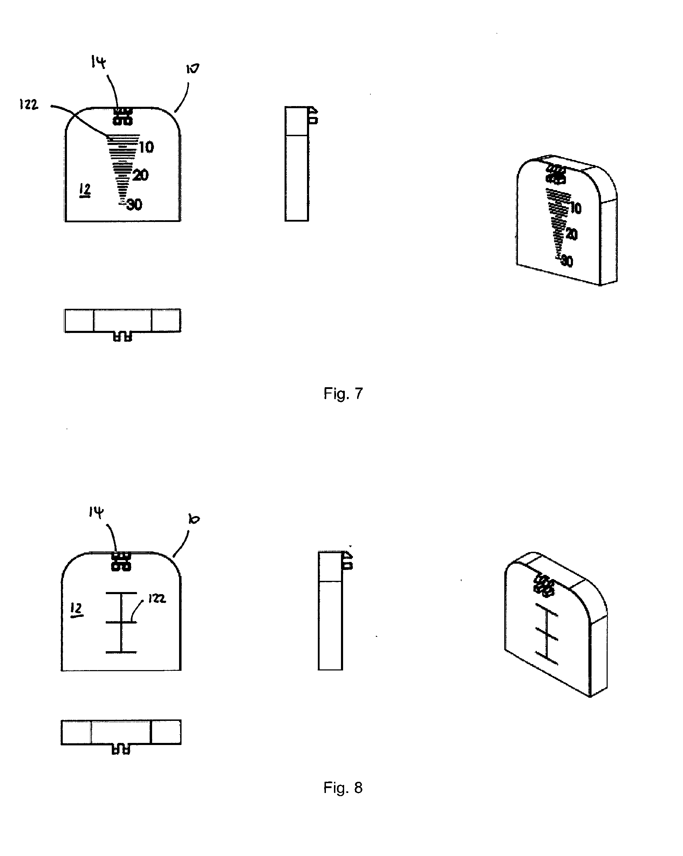

In Fig. 7 a further embodiment of a holder useful for the apparatus of the present invention is shown. The holder comprises a holding means 14 and an image background surface 12. The holding means 14 comprises four protrusions forming a first recess for receiving the dental instrument and for positioning the dental instrument adjacent to the image background surface 12. The protrusions form a second recess perpendicular to the first recess which is adapted for receiving a silicon stopper used for length indication purposes on the dental instrument. The image background surface12 further includes reference markings, for example, for indicating the length of the working length of the dental instrument. Accordingly, the holder may be used for adjusting the working length of an endodontic file having a silicon stopper as follows. In a first step, the dental practitioner positions the dental instrument in the first recess of the holding means so that the silicon stopper is received in the second recess of the holding means. The dental practitioner may then observe the position of the silicon stopper along the working length based on images recorded by the digital camera. The images may be single images or video images. Preferably, the images show the dental instrument with magnification on the display. The dental practitioner may then adjust the position of the silicone stopper and thereby the working length by moving the dental instrument in the direction of the longitudinal axis. Given that the silicone stopper is received and held in the holding means of the holder, the shaft of the dental instrument may slide relative to the silicone stopper. The correct working length may be adjusted by visual inspection of the images or based on an analysis of the image by a software program running on the computer which notifies the dental practitioner when the correct position is reached. After the dental practitioner has adjusted the position of the silicone stopper, the dental instrument may be removed from the holding means without changing the position of the silicone stopper.

A software program may be provided which is run on the computer and which is capable of analyzing the image recorded by the digital camera. In case the dental instrument is coded with a code which may be recognized by the software program, the computer program may map the specific code of the instrument to a database and identify further features of the dental instrument. Based on the content of the database, the software program may then initiate the configuration of the dental handpiece or contraangle with parameters adapted to the specific instrument or modify the database.

Fig. 8 a still further embodiment of a holder useful for the apparatus of the present invention is shown. The image background surface12 includes reference markings 122, for example, for indicating the length of the working length of the dental instrument. Moreover, the reference markings 122 may also be used in order to analyse the image recorded by the digital camera. As in the embodiment of Fig. 7, the holding means 14 comprises four protrusions which form a first recess for receiving the dental instrument and for positioning the dental instrument adjacent to the image background surface 12. The protrusions form a further recess which is adapted to receiving a silicon stopper used for length indication purposes on the dental instrument.

## Claims

1. Apparatus (1) for visualizing features and/or defects of a dental instrument having a longitudinal axis, the apparatus comprising:
(a) a holder (10) having
(a1) an image background surface (12), and
(a2) a holding means (14) for positioning a dental instrument adjacent to the image background surface;
(b) means for arranging the image background surface (12) of the holder (10) in a predetermined position relative to a digital camera (30),
whereby, when the image background surface (12) is arranged in a predetermined position relative to the digital camera (30), the apparatus (1) defines an optical path between the image background surface (12) and the digital camera, and the holding means (14) may receive and hold the dental instrument in a predetermined position in the optical path adjacent to the image background surface (12).

2. The apparatus according to claim 1, wherein the dental instrument is an endodontic instrument.

3. The apparatus according to any one of claims 1 or 2, wherein the means (b) is a rigid structure contiguous with the holder.

4. The apparatus according to any one of the preceding claims, which further comprises means for changing the direction of the optical path, which means is preferably a mirror or prism.

5. The apparatus according to any one of the preceding claims, wherein the holding means further comprises an abutment for receiving the dental instrument or the contra-angle handpiece.

6. The apparatus according to any one of the preceding claims, wherein the holding means receiving the dental instrument positions the longitudinal axis of the dental instrument in parallel to the image background surface.

7. The apparatus according to claim 6, wherein the means for arranging the image background surface of the holder in a predetermined position relative to a digital camera arranges the image background surface so that the optical path is orthogonal to the image background surface.

8. The apparatus according to any of claims 5 or 6, wherein the abutment is a slot or an elongated hole adapted for receiving the shaft of the dental instrument, which limits the displacement of the dental instrument in a direction of the longitudinal axis.

9. The apparatus according to any one of the preceding claims, wherein the holder is further adapted to receiving and holding a packaged dental instrument in the optical path adjacent to the image background surface.

10. The apparatus according to any one of the preceding claims wherein the image background surface further comprises reference markings.

11. A process for visualizing features and/or defects of a dental instrument, which comprises providing an apparatus as defined by any one of the preceding claims;
(i) providing a digital camera;
(ii) establishing an optical path between the digital camera and the apparatus;
(iii) positioning the dental instrument at a predetermined position in the optical path so that the dental instrument is in the focus of the digital camera;
(iv) recording an image of the dental instrument with the digital camera; and
(v) visualizing the features and/or defects of the dental instrument by processing the image.

12. The process according to claim 11, wherein the dental instrument is held by a contra-angle handpiece, or wherein the dental instrument is packaged in a labelled package.

13. The process according to any one of the preceding claims wherein the digital camera is integrated in a personal digital assistant device and the optical path is established by releasably attaching the apparatus to the personal digital assistant device.

14. The process according to any one of the preceding claims wherein the features to be identified are selected from an identification number, surface features and design features.

15. System for carrying out the process according to any one of claims 11 to 16, said system comprising
(a) a holder having an image background surface and a holding means for positioning a dental instrument adjacent to the surface;
(b) a rigid structure contiguous with the holder, said structure being adapted to arrange the image background surface of the holder in a predefined position relative to a digital camera,
(c) a digital camera, and optionally
(d) a computer.
